# EUROPÄISCHE PATENTSCHRIFT

(11) **EP 2 709 884 B1**
(45) Veröffentlichungstag und Bekanntmachung des Hinweises auf die Patenterteilung: **01.06.2016**
(21) Anmeldenummer: 12709882.0
(22) Anmeldetag: 19.03.2012
(51) Int. Cl.: B60T 8/48, B60L 7/24

(54) **Regeneratives Bremssystem für ein Fahrzeug und Verfahren zum Betreiben eines solchen Systems.**
Regenerative braking system for a vehicle and method for operating such a system.
Système de freinage régénératif pour véhicule et méthode pour mettre en oeuvre un tel système.

(30) Priorität: 17.05.2011 DE 102011075971
(43) Veröffentlichungstag der Anmeldung: 26.03.2014
(73) Patentinhaber: Robert Bosch GmbH, 70442 Stuttgart (DE)
(72) Erfinder: STRENGERT, Stefan, 70469 Stuttgart (DE); KUNZ, Michael, 71711 Steinheim An Der Murr (DE)
(86) Internationale Anmeldenummer: PCT/EP2012/054782
(87) Internationale Veröffentlichungsnummer: WO 2012/156123

(56) Entgegenhaltungen:
- WO-A1-2011/134987
- WO-A1-2011/160963
- DE-A1- 19 604 134
- DE-A1- 19 963 760
- JP-A- 2002 255 018
- JP-A- 2006 137 221

## Beschreibung

Die Erfindung betrifft eine Steuervorrichtung für ein Bremssystem eines Fahrzeugs. Des Weiteren betrifft die Erfindung ein Verfahren zum Betreiben eines Bremssystems eines Fahrzeugs.

### Stand der Technik

In der DE 196 04 134 A1 sind ein Verfahren und eine Vorrichtung zur Steuerung einer Bremsanlage eines Kraftfahrzeugs mit einem elektrischen Antrieb beschrieben. Bei einem Abbremsen des Fahrzeugs unter Einsatz des elektrischen Antriebs zum gleichzeitigen Aufladen einer Batterie soll das von der mindestens einen Radbremszange der hydraulischen Bremsanlage auf mindestens ein Rad ausgeübte hydraulische Bremsmoment trotz einer Betätigung des Bremspedals reduziert/deaktiviert werden. Dazu soll dem durch die Betätigung des Bremspedals aus dem Hauptbremszylinder zu den Radbremsen verschobenen Druckmittel entgegengewirkt werden, indem durch Öffnen der Auslassventile der hydraulischen Bremsanlage das aus dem Hauptbremszylinder verschobene Druckmittel über die mindestens eine Radbremszange in mindestens eine Speicherkammer überführt wird. Auf diese Weise soll eine von dem elektrischen Antrieb ausgeführte regenerative Abbremsung verblendbar sein.

Die JP 2002 255018 A beschreibt ein Bremssystem mit zwei Bremskreisen, wobei jeder der zwei Bremskreise eine Niederdruckspeicherkammer und eine weitere Speicherkammer umfasst. Die weitere Speicherkammer eines jeden Bremskreises soll zum Zwischenspeichern von über das zugeordnete Hochdruckschaltventil aus einem Hauptbremszylinder verschobener Bremsflüssigkeit nutzbar sein.

Des Weiteren beschreibt die DE 199 63 760 A1 eine hydraulische Fahrzeugbremsanlage mit zwei Bremskreisen, von denen jeder je eine Hydropumpe, je einen über ein Trennventil mit einem Hauptbremszylinder verbundenen Niederdruck-Hydrospeicher und je einen über ein Rückführventil mit dem Hauptbremszylinder verbundenen Hochdruck-Hydrospeicher aufweist.

### Offenbarung der Erfindung

Die Erfindung schafft ein Bremssystem für ein Fahrzeug mit den Merkmalen des Anspruchs 1 und ein Verfahren zum Betreiben eines Bremssystems eines Fahrzeugs mit den Merkmalen des Anspruchs 8.

### Vorteile der Erfindung

Die vorliegende Erfindung ermöglicht ein Transferieren eines aus dem Hauptbremszylinder herausgedrückten Bremsflüssigkeitsvolumens in der Speicherkammer unter Umgehung der mindestens einen Radbremszange. Das Transferieren erfolgt somit ohne ein Aufbauen eines Restdrucks in der mindestens einen Radbremszange, bzw. eines hydraulischen "Rest-Bremsmoments" an einem Rad.

Das mittels der vorliegenden Erfindung realisierte Bremssystem ist als ein mit einem minimalen Änderungsaufwand erweitertes Einfachsystem umschreibbar. Damit ist es möglich, eine ausreichende rekuperative Effizienz bei minimalen Mehrkosten zu erzielen. Die Steigerung der rekuperativen Effizienz ist bei der vorliegenden Erfindung hauptsächlich darin begründet, dass das vorgeschlagene Bremssystem den Fahrer bei der Modulationsaufgabe im Falle eines entfallenden regenerativen Bremsmoments unterstützt. Die erfindungsgemäße Technologie ist in der Lage, auf ein reduziertes rekuperatives Bremsmoment der rekuperativen Bremse, beispielsweise aufgrund eines vollen Energiespeichers und/oder einer Fahrzeuggeschwindigkeit unter der zum rekuperativen Bremsen benötigten Mindestgeschwindigkeit, zu reagieren. Insbesondere ist dies ausführbar, ohne dass der Bremsweg verlängert wird oder der Fahrer eine Rückwirkung bei der Betätigung des Bremsbetätigungselements bemerkt.

Es wird darauf hingewiesen, dass die Ausführbarkeit der erfindungsgemäßen Technologie keinen an dem Bremsbetätigungselement, dem Bremskraftverstärker oder in dem Hauptbremszylinder ausgebildeten Leerweg erfordert. Somit kann der Fahrer auch in der Rückfallebene schnell in das Bremssystem einbremsen.

Eine vorteilhafte Weiterbildung weist ein Bremsbetätigungselement auf, welches derart an den Hauptbremszylinder angeordnet ist, dass während des Betätigens des Bremsbetätigungselements mit einer Betätigungsstärke ungleich Null aber unter der Mindestbetätigungsstärke, bei welcher die auf das Bremsbetätigungselement aufgebrachte Fahrerbremskraft auf den Hauptbremszylinder-Kolben übertragbar ist, eine Kraftübertragung zwischen dem Bremsbetätigungselement und Hauptbremszylinder-Kolben nicht vorliegt/unterbunden ist. Dies ermöglicht ein Verblenden während eines Nichtvorliegens/einer Unterbindung einer Kraftübertragung zwischen dem Bremsbetätigungselement und dem Hauptbremszylinder-Kolben. Somit ist für den Fahrer kein verändertes Bremsgefühl bei einem regenerativen Bremsen anstelle eines hydraulischen Bremsens wahrnehmbar. Aufgrund der nicht-vorliegenden/unterbundenen Kraftübertragung zwischen dem Hauptbremszylinder-Kolben und dem Bremsbetätigungselement, beispielsweise aufgrund einer fehlenden mechanischen Kopplung bei einer Betätigungsstärke unter dem Mindestbetätigungsstärke, stützt sich die durch den hydraulischen Druckaufbau verursachte Gegenkraft nicht am Bremsbetätigungselement, sondern lediglich an der Verstärkungskraft des Bremskraftverstärkers ab. Die Veränderung der Gegenkraft ist somit für den Fahrer am Bremsbetätigungselement nicht wahrnehmbar. Gleichzeitig hat der Fahrer bei der vorliegenden Erfindung die Möglichkeit, mittels eines Betätigens des Bremsbetätigungselements mit zumindest der Mindestbetätigungsstärke direkt in den Hauptbremszylinder hinein zu bremsen. Somit ist selbst bei einer Funktionsbeeinträchtigung des Bremskraftverstärkers, beispielsweise aufgrund einer Beeinträchtigung der Stromversorgung des Bremssystems, noch ein sicheres Abbremsen des Fahrzeugs gewährleistet.

Man kann dies auch als ein Verblenden innerhalb des Jump-In-Bereichs (des Bremskraftverstärkers) bezeichnen. Der Jump-In-Bereich stellt einen Betätigungsbereich des Bremskraftverstärkers, wie beispielsweise eines Vakuum-Boosters, dar, bei welchem keine mechanische Kopplung zwischen dem Bremsbetätigungselement und dem Hauptbremszylinder-Kolben existiert. Trotzdem wird bereits im Jump-In-Bereich in den Hauptbremszylinder gebremst. Somit weist das Bremssystem keinen Leerweg auf und ist insbesondere in der Rückfallebene sicher betreibbar.

Mittels der erfindungsgemäßen Technologie können auch Bremsanforderungen ohne eine Betätigung des Bremsbetätigungselements (aktive Druckaufbauten) ausgeführt werden.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Steuervorrichtung;
- Fig. 2: eine schematische Darstellung eines Bremssystems mit der Steuervorrichtung;
- Fig. 3: ein Flussdiagramm zum Darstellen einer ersten Ausführungsform des Verfahrens; und
- Fig. 4: ein Flussdiagramm zum Darstellen einer zweiten Ausführungsform des Verfahrens.

### Ausführungsformen der Erfindung

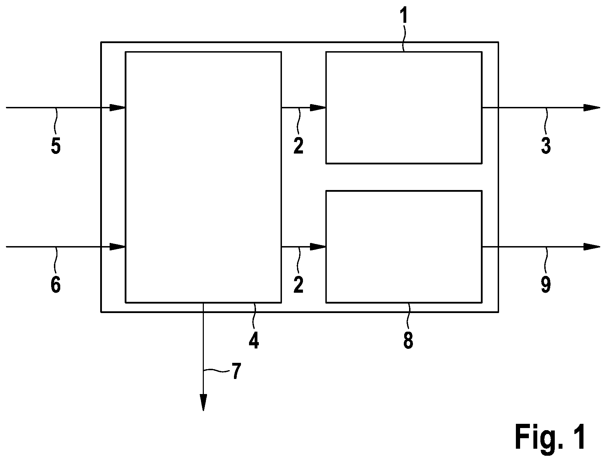

Fig. 1 zeigt eine schematische Darstellung einer Ausführungsform der Steuervorrichtung.

Die in Fig. 1 schematisch wiedergegebene Steuervorrichtung ist für ein Bremssystem eines Fahrzeugs verwendbar. Die Steuervorrichtung weist eine Ventilsteuereinrichtung 1 auf, mittels welcher unter Berücksichtigung (mindestens) eines bereitgestellten Informationssignals 2 bezüglich eines aktuell ausgeübten oder auszuübenden Generator-Bremsmoments eines (nicht dargestellten) Generators mindestens ein (nicht skizziertes) Ventil eines Bremskreises des mit der Steuervorrichtung ausgestatteten Bremssystems steuerbar ist. Dabei ist mittels der Ventilsteuereinrichtung 1 ein Hochdruckschaltventil als das mindestens eine Ventil steuerbar.

Beispielsweise kann mittels der Ventilsteuereinrichtung 1 das mindestens eine Informationssignal 2 mit einem (nicht skizzierten) Vergleichssignal bezüglich eines Mindest-Generator-Bremsmoments vergleichbar sein. Das Vergleichssignal kann insbesondere ein Mindest-Generator-Bremsmoment wiedergeben, ab welchem ein Verblenden des von dem Generator aktuell ausgeübten oder auszuübenden Generator-Bremsmoments auszuführen ist. Das Vergleichssignal kann beispielsweise einem Mindest-Generator-Bremsmoment von einem geringen Wert, wie insbesondere Null, entsprechen. Ebenso kann über den Vergleich des Informationssignals 2 eine zeitliche zu- oder Abnahme des aktuell ausgeübten oder auszuübenden Generator-Bremsmoments erkennbar sein. Beispielsweise kann das Vergleichssignal auf einem internen Speicher abgespeichert sein oder das Informationssignal 2 kann fortlaufend auf dem internen Speicher abgespeichert werden. Somit ist sowohl ein kleines Generator-Bremsmoment, bzw. eine geringe zeitliche Zunahme des Generator-Bremsmoments mittels der Steuervorrichtung auf die nachfolgend beschriebene Weise verblendbar.

Das (mindestens eine) Informationssignal 2 kann beispielsweise von einem Fahrzeugbus, einer Generatorsteuerung und/oder einem Generator-Sensor an die Ventilsteuereinrichtung 1 bereitgestellt werden. Eine weitere vorteilhafte Möglichkeit zum Bereitstellen des Informationssignals 2 an die Ventilsteuereinrichtung 1 wird unten noch genauer beschrieben.

Sofern das Informationssignal 2 über dem Vergleichssignal liegt, ist die Ventilsteuereinrichtung 1 erfindungsgemäß dazu ausgelegt, das mindestens eine (nicht skizzierte) Ventil mittels eines Ventilsteuersignals 3 so in einen zumindest teilgeöffneten Zustand zu steuern, dass ein Bremsflüssigkeitsvolumen aus einem Hauptbremszylinder des Bremssystems über das in den zumindest teilgeöffneten Zustand gesteuerte mindestens eine Ventil in eine Speicherkammer des Bremskreises verschiebbar ist. Dabei ist mittels der Ventilsteuereinrichtung 1 ein Hochdruckschaltventil des Bremskreises als das mindestens eine Ventil so in den zumindest teilgeöffneten Zustand steuerbar, dass das Bremsflüssigkeitsvolumen aus dem Hauptbremszylinder über das in den zumindest teilgeöffneten Zustand gesteuerte Hochdruckschaltventil in die Speicherkammer verschiebbar ist. Somit ist es nicht notwendig, das aus dem Hauptbremszylinder herausgedrückte Bremsflüssigkeitsvolumen über die mindestens eine Radbremszange des Bremskreises in die Speicherkammer zu verschieben, wie unten noch genauer ausgeführt wird.

Das über das in den zumindest teilgeöffneten Zustand gesteuerte Hochdruckschaltventil in die Speicherkammer verschiebbare Bremsflüssigkeitsvolumen kann dem aktuell ausgeübten oder auszuübenden Generator-Bremsmoment entsprechen. Insbesondere kann somit aufgrund des Verschiebens des Bremsflüssigkeitsvolumens in die Speicherkammer der Bremsdruck des Bremskreises mit dem angesteuerten Hochdruckschaltventil so reduziert werden, dass ein hydraulisches Bremsmoment der mindestens einen Radbremszange des Bremskreises mit dem angesteuerten Hochdruckschaltventil verringerbar ist und somit eine zeitliche Zunahme des aktuell ausgeübten oder auszuübenden Generator-Bremsmoments zumindest teilweise kompensierbar ist. Vorzugsweise entspricht die Summe des aktuell ausgeübten oder auszuübenden Generator-Bremsmoments und des hydraulischen Bremsmoments der mindestens einen Radbremszange einem vom Fahrer und/oder einer Fahrzeuggeschwindigkeit-Steuerautomatik (wie z.B. ACC) vorgegebenen Soll-Gesamt-Bremsmoment, obwohl das Generator-Bremsmoment zeitlich variiert/fluktuiert. Auf die genauere Vorgehensweise zum Festlegen des in die Speicherkammer zu verschiebenden Bremsflüssigkeitsvolumens und/oder der zeitlichen Abnahme des hydraulischen Bremsmoments der mindestens einen Radbremszange wird unten noch genauer eingegangen.

Bevorzugter Weise ist die Ventilsteuereinrichtung 1 zusätzlich dazu ausgelegt, das Hochdruckschaltventil, sofern das Informationssignal 2 unter dem Vergleichssignal liegt (oder gleich dem Vergleichssignal ist), so in einen geschlossenen Zustand zu steuern, dass eine hydraulische Verbindung zwischen dem Hauptbremszylinder und der Speicherkammer durch das in den geschlossenen Zustand gesteuerte Hochdruckschaltventil unterbunden ist. Somit kann der mittels der Ventilsteuereinrichtung 1 betreibbare Bremskreis über ein Steuern des Hochdruckschaltventils in den zumindest teilgeöffneten Zustand in einen ersten Modus gesteuert werden, in welchem ein Einbremsen in den Hauptbremszylinder ohne einen Druckaufbau in der mindestens einen Radbremszange des Bremskreises erfolgt, während der Bremskreis über ein Schließen des Hochdruckschaltventils in einen zweiten Modus steuerbar ist, in welchem das Einbremsen in den Hauptbremszylinder ein hydraulisches Bremsmoment der mindestens einen Radbremszange des Bremskreises bewirkt. Wie unten genauer ausgeführt wird, kann dies für ein vorteilhaftes Verblenden des Generator-Bremsmoments genutzt werden.

Des Weiteren kann mittels der Ventilsteuereinrichtung 1, sofern das Informationssignal 2 über dem Vergleichssignal liegt, mindestens ein (nicht dargestelltes) Radeinlassventil des Bremskreises so in einen geschlossenen Zustand steuerbar sein, dass eine hydraulische Verbindung zwischen dem Hauptbremszylinder und der mindestens einen Radbremszange des Bremskreises durch das in den geschlossenen Zustand gesteuerte mindestens eine Radeinlassventil unterbunden ist. Somit auf einfache Weise verhinderbar, dass trotz eines Steuerns des Hochdruckschaltventils in den zumindest teilgeöffneten Zustand das aus dem Hauptbremszylinder herausgedrückte Bremsflüssigkeitsvolumen zumindest zu einem geringfügigen Anteil in die mindestens eine Radbremszange verschoben wird. Entsprechend kann das mindestens eine Radeinlassventil, sofern das Informationssignal 2 unter dem Vergleichssignal liegt, in einen zumindest teilgeöffneten Zustand steuerbar sein.

In einer vorteilhaften Weiterbildung kann die Steuervorrichtung eine Generatorsteuereinrichtung 4 umfassen, mittels welcher das auszuübende Generator-Bremsmoment des Generators festlegbar ist. Das Festlegen des auszuübenden Generator-Bremsmoments kann unter Berücksichtigung eines ersten Sensorsignals 5 bezüglich einer Betätigungsstärke einer Betätigung eines (nicht dargestellten) Bremsbetätigungselements des Bremssystems und/oder eines zweiten Sensor- und/oder Informationssignals 6 bezüglich mindestens eines ausführbaren Kann-Generator-Bremsmoments erfolgen. Das erste Sensorsignal 5 kann beispielsweise von einer Bremsbetätigungselement-Sensorik, wie sie unten noch beschrieben wird, bereitgestellt werden. Das zweite Sensor- und/oder Informationssignal 6 wird vorteilhafter Weise von mindestens einem an dem Generator und/oder an einer mittels des Generators aufladbaren Batterie angeordneten Sensor und/oder einem Fahrzeugbus an die Generatorsteuereinrichtung 4 bereitgestellt. Ein dem festgelegten auszuübenden Generator-Bremsmoment entsprechendes Generator-Steuersignal 7 ist anschließend an den Generator ausgebbar. Ebenso kann von der Generatorsteuereinrichtung 4 das Informationssignal 2 an die Ventilsteuereinrichtung 1 ausgegeben werden.

Vorteilhafterweise ist mittels der Generatorsteuereinrichtung 4 das auszuübende Generator-Bremsmoment unter Berücksichtigung des zweiten Sensor- und/oder Informationssignals 6 und einer Funktion einer aus dem ersten Sensorsignal 5 hergeleiteten Größe festlegbar. In einer besonders vorteilhaften Ausführungsform liegt ein Maximum der Funktion bei einer aus dem ersten Sensorsignal 5 hergeleiteten Größe gleich einer Mindestbetätigungsstärke, ab welcher eine auf das Bremsbetätigungselement aufgebrachte Fahrerbremskraft auf einen verstellbaren Hauptbremszylinder-Kolben des Hauptbremszylinders übertragbar ist.

Die aus dem Sensorsignal 5 hergeleitete Größe kann beispielsweise ein Bremsweg, eine Bremskraft und/oder ein Bremsdruck, bzw. mindestens eine entsprechende Größe bezüglich der Betätigungsstärke der Betätigung des Bremsbetätigungselements, sein. Die Funktion gibt vorzugsweise ein bevorzugtes Generator-Bremsmoment an. Ein Maximum der Funktion liegt vorzugsweise bei einer aus dem Sensorsignal hergeleiteten Größe gleich einer Mindestbetätigungsstärke, ab welcher eine auf das Bremsbetätigungselement aufgebrachte Fahrerbremskraft auf einen verstellbaren Hauptbremszylinder-Kolben eines (nicht skizzierten) Hauptbremszylinders übertragbar ist.

Bei einer Betätigungsstärke unter der Mindestbetätigungsstärke, wenn eine Kraftübertragung zwischen dem verstellbaren Hauptbremszylinder-Kolben und dem Bremsbetätigungselement unterbunden/verhindert/nicht gewährleistet ist, kann die Funktion/das bevorzugte Generator-Bremsmoment somit mit steigender Größe stetig zunehmen. Insbesondere kann das bevorzugte Generator-Bremsmoment bei einer Betätigungsstärke unter der Mindestbetätigungsstärke der Betätigungsstärke der Betätigung des Bremsbetätigungselements/dem Fahrerbremswunsch entsprechen. Demgegenüber weist die Funktion/das bevorzugte Generator-Bremsmoment bei einer Betätigungsstärke über der Mindestbetätigungsstärke keinen zur Größe proportionalen Verlauf auf. Bevorzugter Weise nimmt die Funktion/das bevorzugte Generator-Bremsmoment bei einer Betätigungsstärke über der Mindestbetätigungsstärke ab. Insbesondere kann die Funktion/das bevorzugte Generator-Bremsmoment ab einer Betätigungsstärke über der Mindestbetätigungsstärke gegen Null gehen.

Die Steuervorrichtung ist somit dazu ausgelegt, für ein Rekuperieren eines Generator-Bremsmoments die unterbundene/verhinderte/nicht gewährleistete Kraftübertragung zwischen dem verstellbaren Hauptbremszylinder-Kolben und dem Bremsbetätigungselement zu nutzen. Dies gewährleistet einen vorteilhaften Bedienkomfort für den Fahrer trotz der Rekuperation und des gleichzeitig ausführbaren Verblendens, wie unten noch genauer ausgeführt wird.

Die Generatorsteuereinrichtung 4 kann zusätzlich dazu ausgelegt sein, das Größte der ausführbaren Kann-Generator-Bremsmomente, welche noch kleiner oder gleich der Funktion der aus dem ersten Sensorsignal 5 hergeleiteten Größe sind, als Generator-Bremsmoment festzulegen. Weitere mittels der Generatorsteuereinrichtung 4 ausführbare Funktionen sind weiter unten beschrieben.

In einer weiteren vorteilhaften Weiterbildung kann die Steuervorrichtung auch eine Pumpensteuereinrichtung 8 umfassen, mittels welcher eine (nicht dargestellte) Pumpe des Bremskreises ansteuerbar ist. Bevorzugter Weise ist mittels der ansteuerbaren Pumpe eine Bremsflüssigkeit aus der Speicherkammer des Bremskreises zu der mindestens einen Radbremszange des Bremskreises pumpbar. In diesem Fall ist die Pumpensteuereinrichtung 8 in vorteilhafter Weise dazu ausgelegt, sofern das aktuell ausgeübte oder auszuübende Generator-Bremsmoment zeitlich abnimmt, die Pumpe mittels des Pumpen-Steuersignals 9 aus einem inaktiven Pumpmodus in einen aktiven Pumpmodus zu steuern. Auf diese Weise ist das hydraulische Bremsmoment der mindestens einen Radbremszange so steigerbar, dass die zeitliche Abnahme des Generator-Bremsmoments zumindest teilweise kompensierbar ist. Bevorzugter Weise ist die Pumpe mittels der Pumpensteuereinrichtung 8 so ansteuerbar, dass die Summe des Generator-Bremsmoments und des hydraulischen Bremsmoments der mindestens einen Radbremszange trotz der zeitlichen Abnahme des Generator-Bremsmoments (nahezu) konstant bleibt und/oder dem Soll-Gesamt-Bremsmoment entspricht.

Die Ventilsteuereinrichtung 1 kann zusammen mit der Generatorsteuereinrichtung 4 und/oder der Pumpensteuereinrichtung 8 in eine Auswerteelektronik integriert sein. In diesem Fall entfällt die Notwendigkeit, die Steuereinrichtungen 1, 4 und 8 getrennt mit auszuwertenden Informationen zu versorgen. Die Steuervorrichtung ist jedoch nicht auf die Integration der Steuereinrichtungen 1, 4 und 8 in eine Auswerteelektronik limitiert. Die Steuervorrichtung ist zumindest dazu ausgelegt die Verfahrensschritte der unten beschriebenen Verfahren auszuführen. Es wird hier deshalb nicht genauer auf die Funktionsweise der Steuervorrichtung eingegangen.

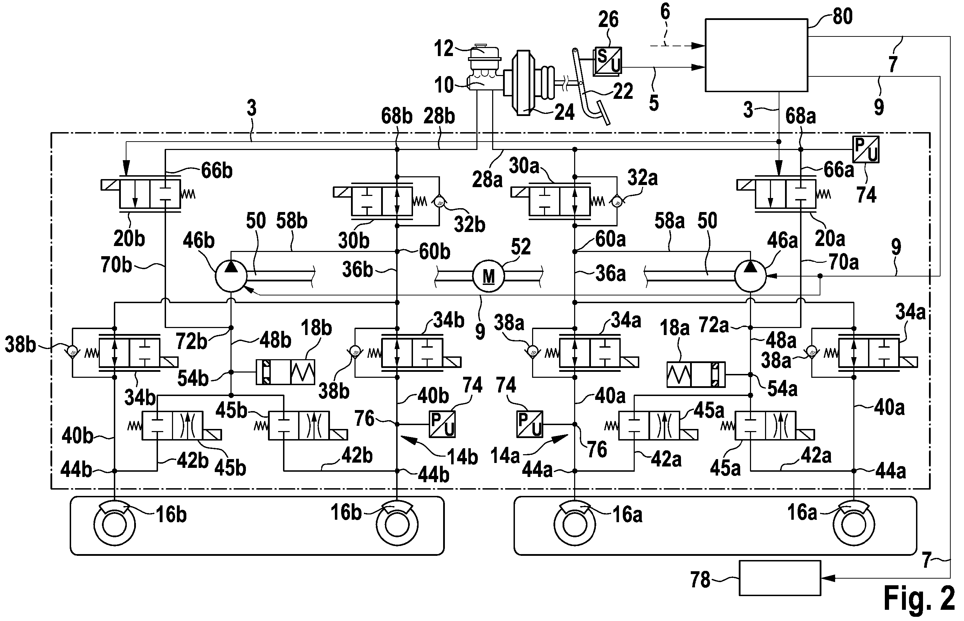

Fig. 2 zeigt eine schematische Darstellung eines Bremssystems mit der Steuervorrichtung. Das in Fig. 2 schematisch wiedergegebene Bremssystem ist beispielsweise in einem Hybrid- und in einem Elektrofahrzeug vorteilhaft einsetzbar. Die Einsetzbarkeit des im Weiteren beschriebenen Bremssystems ist jedoch nicht auf die Verwendung in einem Hybrid- oder in einem Elektrofahrzeug beschränkt.

Das Bremssystem weist einen Hauptbremszylinder 10 auf, welcher beispielsweise als Tandemhauptbremszylinder ausführbar ist. Das Bremssystem ist jedoch nicht auf die Verwendung eines Tandemhauptbremszylinders beschränkt. Der Hauptbremszylinder 10 kann über mindestens eine Bremsflüssigkeit-Austauschöffnung, wie beispielsweise eine Schnüffelbohrung, mit einem Bremsmediumreservoir 12 verbunden sein.

Mit dem Hauptbremszylinder 10 ist mindestens ein Bremskreis 14a und 14b hydraulisch verbunden. Der mindestens eine Bremskreis 14a und 14b umfasst mindestens eine Radbremszange 16a und 16b, eine Speicherkammer 18a und 18b und ein Hochdruckschaltventil 20a und 20b. In einer bevorzugten Ausführungsform umfasst der mindestens eine Bremskreis 14a und 14b mindestens ein stetig regelbares/ stetig steuerbares Hochdruckschaltventil 20a und 20b. Erfindungsgemäß ist die mindestens eine Speicherkammer 18a und 18b als Niederdruckspeicherkammer ausgebildet.

Die dem Bremskreis 14a oder 14b zugeordneten Räder können beispielsweise diagonal an einem Fahrzeug angeordnet sein. In diesem Fall ist das Bremssystem für eine X-Bremskreisaufteilung ausgelegt, auf welche es jedoch nicht beschränkt ist. Beispielsweise kann das Bremssystem auch für eine II-Bremskreisaufteilung verwendet werden, bei welcher die einem Bremskreis 14a und 14b zugeordneten Räder an einer gemeinsamen Achse angeordnet sind.

Das Bremssystem weist auch ein Bremsbetätigungselement 22, wie beispielsweise ein Bremspedal, auf. Vorteilhafterweise ist das Bremsbetätigungselement 22 derart an dem Hauptbremszylinder 10 angeordnet ist, dass bei einem Betätigen des Bremsbetätigungselements 22 mit zumindest einer Mindestbetätigungsstärke eine auf das Bremsbetätigungselement 22 aufgebrachte Fahrerbremskraft auf einen (nicht skizzierten) verstellbaren Hauptbremszylinder-Kolben des Hauptbremszylinders 10 so übertragbar ist, dass der Hauptbremszylinder-Kolben mittels der Fahrerbremskraft verstellbar ist.

Mittels dieses Verstellens des Hauptbremszylinder-Kolbens wird ein Innendruck in mindestens einer Kammer des Hauptbremszylinders 10 gesteigert. Bei dem hier beschriebenen Bremssystem ist das Bremsbetätigungselement 22 zusätzlich derart an dem Hauptbremszylinder 10 angeordnet, dass während des Betätigens des Bremsbetätigungselements mit einer Betätigungsstärke ungleich Null aber unter der Mindestbetätigungsstärke eine Kraftübertragung zwischen dem Bremsbetätigungselement 22 und dem Hauptbremszylinder-Kolben unterbunden ist. Dies gewährleistet den Vorteil, dass der Fahrer während des Betätigens des Bremsbetätigungselements 22 mit der Betätigungsstärke unter der Mindestbetätigungsstärke von dem Hauptbremszylinder 10 und dem mindestens einen daran angebundenen Bremskreis 14a und 14b "entkoppelt" ist, und somit keine Rückwirkung des darin vorliegenden Drucks spürt. Auf die vorteilhafte Einsetzbarkeit dieses Vorteils zum Verblenden eines Generator-Bremsmoments wird unten noch genauer eingegangen. Das Bremssystem ist jedoch nicht auf eine derartige Anordnung des Bremsbetätigungselements 22 an dem Hauptbremszylinder 10 beschränkt.

Das dargestellte Bremssystem weist in einer bevorzugten Ausführungsform noch einen Bremskraftverstärker 24, wie beispielsweise einen Vakuumbremskraftverstärker, auf. Anstelle eines Vakuumbremskraftverstärkers kann das Bremssystem auch einen anderen Typ des Bremskraftverstärkers 24, wie beispielsweise eine hydraulische und/oder eine elektromechanische Verstärkungseinrichtung, aufweisen. Der Bremskraftverstärker 24 kann insbesondere ein stetig regelbarer/stetig steuerbarer Bremskraftverstärker sein.

Mittels des Bremskraftverstärkers 24 ist in der Regel zumindest während des Betätigens des Bremsbetätigungselements 22 unter der Mindestbetätigungsstärke der Hauptbremszylinder-Kolben so verstellbar, dass ein Bremsflüssigkeitsvolumen aus dem Hauptbremszylinder 10 verschiebbar ist. Aufgrund der vorteilhaften Funktionsweise des mindestens einen Hochdruckschaltventils 20a und 20b ist das aus dem Hauptbremszylinder verschobene Bremsflüssigkeitsvolumen wahlweise in die Speicherkammer 18a und 18b oder in die mindestens eine Radbremszange 16a und 16b verschiebbar.

Ein Bremskraftverstärker 24 weist in der Regel zu Beginn seines Betätigungswegs eine unendliche Verstärkung auf. In diesem Bereich besteht noch keine mechanische Kopplung zwischen dem Bremsbetätigungselement 22, wie beispielsweise einem Bremspedal, und dem Hauptbremszylinder-Kolben. Man kann dies auch als Fehlen einer mechanischen Kopplung zwischen Bremsbetätigungselement 22 und dem Bremssystem bezeichnen. Die Fahrerbremskraft wird in diesem Bereich nicht zur Betätigung des Hauptbremszylinders 10, das heißt zum Verstellen des Hauptbremszylinder-Kolbens, herangezogen, sondern lediglich zur Steuerung des Bremskraftverstärkers 24 genutzt.

Der Beginn des Betätigungswegs, in welchem die Betätigungsstärke ungleich Null noch unter der Mindestbetätigung liegt, wird deshalb häufig auch Jump-In-Bereich genannt. Außerhalb des Jump-In-Bereichs existiert eine mechanische Kopplung zwischen dem Bremsbetätigungselement 22 und dem Hauptbremszylinder-Kolben. Die Fahrerbremskraft wird somit außerhalb des Jump-In-Bereichs zum Verstellen des Hauptbremszylinder-Kolbens und somit zum Einbremsen in die mindestens eine Radbremszange 16a und 16b genutzt. Dieser Vorgang kann durch die zusätzliche Kraft des Bremskraftverstärkers 24 unterstützt werden.

Die Eigenschaft des Bremskraftverstärkers 24 kann somit für ein Einbremsen in den Hauptbremszylinder ohne eine mechanische Kopplung/Kraftübertragung zwischen dem Bremsbetätigungselement 22 und dem Hauptbremszylinder-Kolben genutzt werden. Somit ist der Beginn des Betätigungswegs mit einer Betätigungsstärke ungleich Null aber unter der Mindestbetätigung, bzw. der Jump-In-Bereich, vorteilhaft für ein Verblenden eines Generator-Bremsmoments verwendbar, wie unten noch ausgeführt wird.

Bevorzugter Weise umfasst das Bremssystem auch einen Bremsbetätigungselement-Sensor 26, mittels welchem die Betätigungsstärke der Betätigung des Bremsbetätigungselements 22 durch den Fahrer ermittelbar ist. Der Bremsbetätigungselement-Sensor 26 kann beispielsweise einen Pedalwegsensor, einen Differenzwegsensor und/oder einen Stangenwegsensor umfassen. Zur Erfassung der Betätigungsstärke, welche dem Fahrerbremswunsch entspricht, ist jedoch auch eine anders geartete Sensorik anstelle oder zusätzlich zu den hier aufgezählten Sensortypen einsetzbar.

Außerdem kann das Bremssystem über einen zusätzlichen Leerweg verfügen, der entweder am Bremsbetätigungselement 22, wie beispielsweise einem Bremspedal, an dem Bremskraftverstärker 24 und/oder an dem Hauptbremszylinder 10 ausgebildet sein kann. Da die erfindungsgemäße Technologie einen derartigen Leerweg am Bremssystem nicht benötigt, wird hier nicht weiter auf diesen eingegangen.

Bei der dargestellten Ausführungsform weist das Bremssystem zwei Bremskreise 14a und 14b auf, welche gleich ausgebildet sind. Die Ausbildbarkeit des Bremssystems ist jedoch weder auf diese Anzahl der Bremskreise 14a und 14b, noch auf die gleiche Ausbildung seiner Bremskreise 14a und 14b beschränkt. Insbesondere sind die nachfolgenden Ausführungen zu den Bremskreisen 14a und 14b lediglich beispielhaft zu verstehen:
Jeder der Bremskreise 14a und 14b weist zwei Radbremszangen 16a und 16b auf, die zusammen einer Speicherkammer 18a und 18b zugeordnet ist. Die Bremskreise 14a und 14b sind über eine Zufuhrleitung 28a und 28b, welche zu einem Bremskreis-eigenen Umschaltventil 30a oder 30b mit einem parallel dazu angeordneten Rückschlagventil 32a oder 32b führt, mit dem Hauptbremszylinder 10 verbunden. Die zwei je einer Radbremszange 16a oder 16b zugeordneten Radeinlassventile 34a und 34b sind über eine sich verzweigende Leitung 36a oder 36b mit dem Umschaltventil 30a oder 30b verbunden. Parallel zu jedem der Radeinlassventile 34a und 34b ist je ein Rückschlagventil 38a oder 38b angeordnet. Die Radeinlassventile 34a und 34b sind über eine Leitung 40a oder 40b mit der zugeordneten Radbremszange 16a und 16b verbunden. Über eine Leitung 42a oder 42b und einem in den Leitungen 40a und 40b ausgebildeten Verzweigungspunkt 44a oder 44b ist auch je ein Radauslassventil 45a und 45b mit der zugeordneten Bremszange 16a oder 16b verbunden.
Jeder der Bremskreise 14a und 14b weist eine Pumpe 46a oder 46b auf, welche über eine sich verzweigende Leitung 48a oder 48b mit den beiden Radauslassventilen 45a und 45b des jeweiligen Bremskreises 14a und 14b verbunden ist. Die Pumpen 46a und 46b können beispielsweise als Einkolbenpumpen ausgeführt sein. Anstelle eines derartigen Pumpentyps können jedoch auch anders ausgeführte Modulationssysteme, die beispielsweise mindestens eine Pumpe mit mehreren Kolben, mindesten eine asymmetrische Pumpe und/oder mindestens eine Zahnradpumpe umfassen, eingesetzt werden. Insbesondere können die Pumpen 46a und 46b an einer gemeinsamen Welle 50 eines Pumpenmotors 52 angeordnet sein.

Die oben schon beschriebene Speicherkammer 18a und 18b kann über jeweils einen Verzweigungspunkt 54a und 54b mit der Leitung 48a und 48b verbunden sein. Es wird darauf hingewiesen, dass kein Rückschlagventil in der Leitung 48a und 48b angeordnet ist. Dies realisiert die erfindungsgemäße Transferierbarkeit eines Bremsflüssigkeitsvolumens aus dem Hauptbremszylinder 10 in die Speicherkammer 18a oder 18b unter Umgehung der Radbremszylinder 16a und 16b.

Während die Ansaugseite der Pumpe 46a und 46b mit den Radauslassventilen 45a und 45b und der Speicherkammer 18a und 18b verbunden ist, kann die Förderseite mittels einer weiteren Leitung 58a und 58b und einem in der Leitung 36a und 36b ausgebildeten Verzweigungspunkt 60a oder 60b mit dem Umschaltventil 30a oder 30b und den Radeinlassventilen 34a und 34b des zugeordneten Bremskreises 14a oder 14b verbunden sein.

Die bei dem Bremssystem so vorteilhaft zum Verblenden eines Generator-Bremsmoments einsetzbaren Hochdruckschaltventile 20a und 20b sind über eine Leitung 66a oder 66b und einen in der Zufuhrleitung 58a und 58b ausgebildeten Verzweigungspunkt 68a oder 68b mit dem Hauptbremszylinder 10 verbunden ist. Außerdem ist jedes Hochdruckschaltventil 20a und 20b über eine Leitung 70a und 70b mit einem in der Leitung 48a und 48b ausgebildeten Verzweigungspunkt 72a und 72b mit den daran angebundenen Komponenten hydraulisch verbunden. Des Weiteren kann mindestens ein Bremskreis 14a oder 14b einen Drucksensor 74 aufweisen, welcher beispielsweise über einen Verzweigungspunkt 76 mit der Leitung 40a und 40b oder mit einer Zufuhrleitung 28a verbunden ist.

Das Bremssystem weist auch einen Generator 78 und die oben schon beschriebene Steuervorrichtung 80 auf, welche die Signale 5 und 6 von dem Bremsbetätigungselement-Sensor 26, dem Generator 78, einer (nicht skizzierten) Batterie und/oder einem Bussystem empfängt und die Steuersignale 3, 7 und 9 an den Generator 78, die Hochdruckschaltventile 20a und 20b und/oder die Pumpen 46a und 46b ausgibt. Bezüglich der Funktionsweise der Steuervorrichtung 80 wird auf die oberen Ausführungen verwiesen.

Somit sind auch mittels des in den vorausgehenden Absätzen beschriebenen Bremssystems die oben schon genannten Vorteile realisierbar.

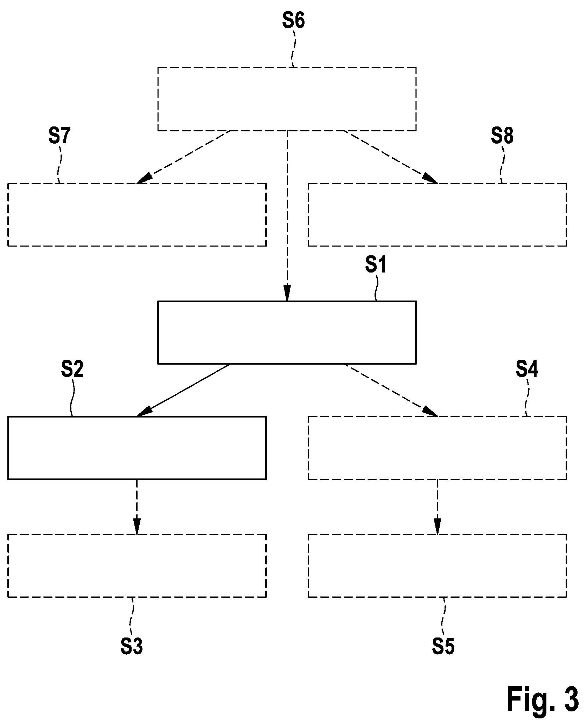

Fig. 3 zeigt ein Flussdiagramm zum Darstellen einer ersten Ausführungsform des Verfahrens.

Das nachfolgend beschriebene Verfahren kann insbesondere zumindest teilweise mittels der oben schon beschriebenen Steuervorrichtung ausführbar sein. Die Ausführbarkeit des Verfahrens ist jedoch nicht auf die Verwendung der Steuervorrichtung, bzw. des oben beschriebenen Bremssystems, beschränkt.

In einem Verfahrensschritt S1 wird eine Bremsmoment-Größe bezüglich eines aktuell ausgeübten oder auszuübenden Generator-Bremsmoments eines Generators mit einer Vergleichsgröße bezüglich eines Mindest-Generator-Bremsmoments verglichen. Beispiele für die Vergleichsgröße zum Vergleichen der Bremsmoment-Größe sind oben schon genannt. Die verglichene Bremsmoment-Größe kann beispielsweise von einem Sensor zum Messen des Generator-Bremsmoments und/oder von einem Fahrzeug und/oder einer fahrzeugeigenen Steuervorrichtung zum Ansteuern des Generators bereitgestellt werden. Auf eine besonders vorteilhafte Weise zum Bereitstellen der Bremsmoment-Größe wird unten noch eingegangen.

In einem Verfahrensschritt S2 wird, sofern die Bremsmoment-Größe über der Vergleichsgröße liegt, z.B. weil die Bremsmoment-Größe zeitlich zunimmt, mindestens ein Ventil eines Bremskreises des Bremssystems in einen zumindest teilgeöffneten Zustand gesteuert. Dies geschieht so, dass ein aus dem Hauptbremszylinder des Bremssystems herausgedrücktes Bremsflüssigkeitsvolumen über das in den zumindest teilgeöffneten Zustand gesteuerte mindestens eine Ventil in eine Speicherkammer des Bremskreises verschoben wird. Dabei wird mindestens ein Hochdruckschaltventil des Bremskreises als das mindestens eine Ventil in den zumindest teilgeöffneten Zustand gesteuert. Somit ist bewirkbar, dass das aus dem Hauptbremszylinder herausgedrückte Bremsflüssigkeitsvolumen über das in den zumindest teilgeöffneten Zustand gesteuerte Hochdruckschaltventil in die Speicherkammer verschoben wird. Auf diese Weise kann das hydraulische Bremsmoment der mindestens einen Radbremszange des Bremskreises trotz des Verschiebens der Bremsflüssigkeit aus dem Hauptbremszylinder in den Bremskreis konstant gehalten oder reduziert werden. Trotz der Betätigung des Bremsbetätigungselements durch den Fahrer und des damit verbundenen Druckaufbaus in dem Hauptbremszylinder wird deshalb kein (unerwünschtes) hydraulisches Bremsmoment aufgebaut.

Mittels des Verfahrens ist gewährleistbar, dass ein hydraulisches Bremsmoment mindestens einer Radbremszange so an ein ausführbares und aktuell ausgeführtes Generator-Bremsmoment eines Generators angepasst wird, dass ein von dem Fahrer vorgegebenes Gesamt-Bremsmoment verlässlich eingehalten wird.

Optionaler Weise wird, sofern die Bremsmoment-Größe über der Vergleichsgröße liegt, zusammen mit dem Verfahrensschritt S2 auch ein Verfahrensschritt S3 ausgeführt. In dem Verfahrensschritt S3 wird mindestens ein Radeinlassventil des Bremskreises so in einen geschlossenen Zustand gesteuert, dass eine hydraulische Verbindung zwischen dem Hauptbremszylinder und der mindestens einen Radbremszange des Bremskreises durch das in den geschlossenen Zustand gesteuerte mindestens eine Radeinlassventil unterbunden wird. Somit ist auf einfache Weise auch ein geringfügiges Befüllen der mindestens einen Radbremszange aufgrund des in dem Hauptbremszylinder gesteigerten Drucks verhindert.

Sofern die Bremsmoment-Größe unter der Vergleichsgröße liegt, kann ein Verfahrensschritt S4 ausgeführt werden. In dem Verfahrensschritt S4 wird das Hochdruckschaltventil des Bremskreises in den geschlossenen Zustand gesteuert. Auf diese Weise ist eine hydraulische Verbindung zwischen dem Hauptbremszylinder und der mindestens einen Speicherkammer verlässlich unterbindbar, wodurch eine Bremsflüssigkeitsverschiebung aus einem Hauptbremszylinder des Bremssystems in mindestens eine Radbremszange des Bremskreises bewirkt/gewährleistet wird.

Der Fahrer bremst somit mittels des Bremsbetätigungselements, wie beispielsweise mittels eines Bremspedals, über den Hauptbremszylinder in die mindestens eine Radbremszange ein. Zur Verstärkung der Bremswirkung des Fahrers kann zusätzlich ein Bremskraftverstärker eingesetzt werden. Das Verhalten des mittels des Verfahrens gesteuerten Bremssystems entspricht somit während des Verfahrensschritts S4 einem (konventionellen) Bremssystem ohne eine ausgeführte Verblendungs-Funktion.

Bevorzugter Weise wird mit dem Verfahrensschritt S4 auch ein Verfahrensschritt S5 ausgeführt, in welchem das mindestens eine Radeinlassventil in zumindest einen teilgeöffneten Zustand gesteuert wird. Somit kann mittels des Hauptbremszylinders verlässlich in die mindestens eine Radbremszange hinein gebremst werden.

In einer vorteilhaften Weiterbildung umfasst das Verfahren auch einen Verfahrensschritt S6. In dem Verfahrensschritt S6 wird das auszuübende Generator-Bremsmoment des Generators festgelegt. Dies erfolgt unter Berücksichtigung einer Betätigungsstärkegröße einer Betätigungsstärke einer Betätigung eines Bremsbetätigungselements des Bremssystems und/oder einer Generator-Information bezüglich mindestens eines ausführbaren Kann-Generator-Bremsmoments. Vorzugsweise wird dabei sichergestellt, dass das Größte ausführbare Generator-Bremsmoment zum Abbremsen des Fahrzeugs ausgeführt wird, um eine mittels des Generators aufladbare Batterie innerhalb einer vergleichsweise kurzen Zeit aufzuladen.

Ein regeneratives Bremsen ist in der Regel nur ausführbar, wenn die mittels des Generators aufladbare Batterie einen Aufladungswert unterhalb eines Schwellwerts hat und/oder das Fahrzeug mit einer Geschwindigkeit über einer vorgegebenen Mindestgeschwindigkeit fährt. Somit wirkt während des generativen Bremsens ein festgelegtes/bekanntes/leicht messbares Generator-Bremsmoment, welches häufig jedoch aufgrund der hier genannten Faktoren nicht zeitlich konstant einhaltbar ist, auf das Fahrzeug ein. Trotz des zeitlichen Variierens/Wegfallens des Generator-Bremsmoments ist es wünschenswert, dass das von dem Fahrer vorgegebene Gesamt-Bremsmoment verlässlich eingehalten wird. Dies ist mittels des hier beschriebenen Verfahrens vorteilhaft realisierbar.

Bevorzugter Weise wird in dem Verfahrensschritt S6 eine aktuelle Betätigungsstärkegröße mit einer zuvor erfassten/ermittelten Betätigungsgröße verglichen. Insofern eine gesteigerte Betätigungsgröße erkannt wird, wird die gesteigerte Betätigungsgröße mit einem Schwellwert bezüglich einer Mindestbetätigungsstärke verglichen. Die Mindestbetätigungsstärke entspricht einer Betätigungsstärke, ab welcher eine auf das Bremsbetätigungselement aufgebrachte Fahrerbremskraft auf einem verstellbaren Hauptbremszylinder-Kolben des Hauptbremszylinders übertragen wird. Sofern die gesteigerte Betätigungsstärkegröße den Schwellwert überschreitet, wird das Generator-Bremsmoment jedoch trotz der gesteigerten Betätigungsstärkegröße konstant gehalten oder reduziert.

Vorzugsweise wird in dem Verfahrensschritt S6, sofern die gesteigerte Betätigungsstärkegröße (noch) unter dem Schwellwert liegt, ein gesteigertes Generator-Bremsmoment unter Berücksichtigung der gesteigerten Betätigungsstärkegröße ermittelt. Anschließend wird das Größte der ausführbaren Kann-Generator-Bremsmomente, welche noch kleiner oder gleich dem gesteigerten Generator-Bremsmoment sind, als auszuführendes Generator-Bremsmoment festgelegt. (Sofern kein ausführbares Kann-Generator-Bremsmoment ermittelbar ist, welches kleiner oder gleich dem gesteigerten Generator-Bremsmoment ist, wird das auszuführende Generator-Bremsmoment gleich Null festgelegt.) Da bei dem Verfahren ein rekuperatives Bremsen mit einem hohen festgelegten Generator-Bremsmoment hauptsächlich bei einer Betätigungsstärke unter der Mindestbetätigungsstärke ausgeführt wird, wird aufgrund der unterbundenen Kraftübertragung zwischen dem Bremsbetätigungselement und dem Hauptbremszylinder keine Kraftrückkwirkung/Gegenkraft auf das Bremsbetätigungselement transferiert. Somit spürt der Fahrer trotz eines rein hydraulischen Bremsens keine Gegenkraft am Bremsbetätigungselement, wie bei Vorliegen einer mechanischen Kopplung zwischen dem Bremsbetätigungselement und dem Hauptbremszylinder. Ebenso bemerkt der Fahrer bei einem rein generativen Bremsen kein Fehlen der Gegenkraft, da er gewohnt ist, bei einer Betätigungsstärke unter der Mindestbetätigungsstärke keine von der mindestens einen Radbremszange bedingte Gegenkraft zu spüren.

In einem dem Verfahrensschritt S6 nachfolgenden Verfahrensschritt S7 wird der Generator entsprechend dem festgelegten auszuübenden Generator-Bremsmoment angesteuert.

Optionaler Weise weist das Verfahren auch einen Verfahrensschritt S8 auf. In dem Verfahrensschritt S8 wird, sofern das aktuell ausgeübte oder auszuübende Generator-Bremsmoment zeitlich abnimmt, eine Pumpe des Bremskreises aus einem inaktiven Pumpmodus in einen aktiven Pumpmodus gesteuert. Mittels der Pumpe des Bremskreises ist eine Bremsflüssigkeit aus der Speicherkammer des Bremskreises zu der mindestens einen Radbremszange des Bremskreises pumpbar. Somit kann das hydraulische Bremsmoment der mindestens einen Radbremszange mittels der Aktivierung der Pumpe gesteigert werden. Auf diese Weise ist die zeitliche Abnahme des Generator-Bremsmoments zumindest teilweise kompensierbar.

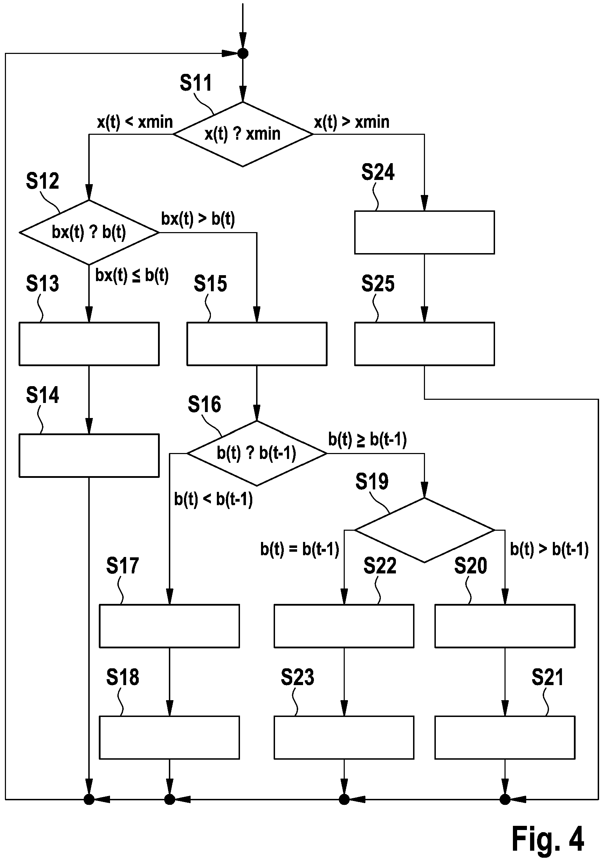

Fig. 4 zeigt ein Flussdiagramm zum Darstellen einer zweiten Ausführungsform des Verfahrens.

Die Ausführbarkeit des nachfolgend beschriebenen Verfahrens ist nicht auf die Verwendung der oben beschriebenen Steuervorrichtung, bzw. des damit ausgestatteten Bremssystems, beschränkt, obwohl das Verfahren zumindest teilweise damit ausführbar ist.

In einem Verfahrensschritt S11 wird ein empfangenes Sensorsignal bezüglich einer Betätigungsstärke x(t) einer Betätigung des Bremsbetätigungselements durch den Fahrer mit einem Schwellwert bezüglich einer Mindestbetätigungsstärke xmin verglichen, wobei bei einem Betätigen des Bremsbetätigungselements mit einer Betätigungsstärke x(t) unter der Mindestbetätigungsstärke xmin eine Kraftübertragung zwischen dem Bremsbetätigungselement und einem verstellbaren Hauptbremszylinder-Kolben eines Hauptbremszylinders unterbunden ist. Demgegenüber ist bei einem Betätigen des Bremsbetätigungselements mit zumindest der Mindestbetätigungsstärke xmin eine auf das Bremsbetätigungselement aufgebrachte Fahrerbremskraft so auf den verstellbaren Hauptbremszylinder-Kolben übertragen, dass dieser mittels der Fahrerbremskraft verstellbar und somit ein Innendruck in mindestens einer Kammer des Hauptbremszylinders steigerbar ist. Die Mindestbetätigungsstärke kann beispielsweise einem Gesamt-Bremsmoment von 0,2 g entsprechen.

Sofern die dem Sensorsignal entsprechende Betätigungsstärke x(t) unterhalb der dem Schwellwert entsprechenden Mindestbetätigungsstärke xmin liegt, bzw. sofern das Sensorsignal unter dem Schwellwert liegt, wird in einem Verfahrensschritt S12 das Sensorsignal mit einem Informationssignal bezüglich mindestens eines ausführbaren Kann-Generator-Bremsmoments b(t) verglichen. Beispielsweise wird dabei untersucht, ob ein der Betätigungsstärke entsprechendes Generator-Bremsmoment bx(t) aktuell mittels des Generators ausübbar ist. Trifft dies zu, so wird nachfolgend der Verfahrensschritt S13 (Verfahrensschritt S2) ausgeführt.

In dem Verfahrensschritt S13 wird das Hochdruckschaltventil des mindestens einen Bremskreises des Bremssystems in einen zumindest teilgeöffneten Zustand gesteuert. Vorzugsweise wird in dem Verfahrensschritt S13 auch das mindestens eine Radeinlassventil des mit dem angesteuerten Hochdruckschaltventil ausgestatteten Bremskreises geschlossen (Verfahrensschritt S3). Die Betätigung des Bremsbetätigungselements bewirkt somit ein Verschieben einer Bremsflüssigkeit aus dem Hauptbremszylinder in die Speicherkammer des mindestens einen Bremskreises mit dem angesteuerten Hochdruckschaltventil.

Somit wird sichergestellt, dass trotz der Betätigung des Bremsbetätigungselements und des damit verbundenen Verstellens des Hauptbremszylinder-Kolbens kein hydraulisches Bremsmoment mittels der mindestens einen Radbremszange auf ein Rad des Fahrzeugs ausgeübt wird. Dadurch ist das von dem Fahrer angeforderte Gesamt-Bremsmoment vollständig zum Aufladen der Batterie über ein regeneratives Bremsen nutzbar. Da bei einer Betätigungsstärke x(t) unter der Mindestbetätigung xmin keine Kraftübertragung zwischen dem Bremsbetätigungselement und dem Hauptbremszylinder-Kolben vorliegt, spürt der Fahrer nicht, dass das aus dem Hauptbremszylinder verschobenen Bremsflüssigkeitsvolumen in die Speicherkammer, und nicht in die mindestens eine Radbremszange, verschoben wird.

Man kann dies auch so umschreiben, dass innerhalb eines durch die Mindestbetätigung xmin definierten Jump-In-Bereichs keine mechanische Kopplung zwischen dem Bremsbetätigungselement und dem Hauptbremszylinder-Kolben existiert und der Fahrer somit aufgrund des grundsätzlichen Fehlens der Pedalgegenkraft im Jump-In-Bereich nicht feststellen kann, in welche Komponente das Bremsflüssigkeitsvolumen verschoben wird. Der Fahrer spürt somit nicht an der Pedalgegenkraft, ob hydraulisch oder generativ gebremst wird.

In dem anschließend ausgeführten Verfahrensschritt S14 (Verfahrensschritt S7) wird der Generator so angesteuert, dass das Ist-Bremsmoment des Generators dem festgelegten auszuführenden Generator-Bremsmoment, insbesondere dem angeforderten Gesamt-Bremsmoment, entspricht. Dies gewährleistet ein schnelles Aufladen der Batterie.

Wird in dem Verfahrensschritt S12 festgestellt, dass nur rein hydraulisch verzögert werden kann (beispielsweise weil der Generator nicht in Betrieb genommen werden kann), wird (in einem nicht dargestellten Verfahrensschritt) das Hochdruckschaltventil des mindestens einen Bremskreises geschlossen. Somit kann Bremsflüssigkeit aus dem Hauptbremszylinder in die mindestens eine Radbremszange verschoben werden, während eine Bremsflüssigkeitsverschiebung aus dem Hauptbremszylinder in die Speicherkammer unterbunden ist. Dies gewährleistet ein verlässlich ausführbares rein hydraulisches Abbremsen des Fahrzeugs. Vorzugsweise wird dazu das mindestens eine Radeinlassventil in einen zumindest teilgeöffneten Zustand gesteuert.

Liegt die Betätigungsstärke x(t) noch unter der Mindestbetätigungsstärke xmin, obwohl ein der Betätigungsstärke x(t) entsprechendes Bremsmoment bx(t) größer als das (maximal) ausführbare Generator-Bremsmoment b(t) ist, so kann sowohl regenerativ als auch hydraulisch gebremst werden. Dazu kann in dem Verfahrensschritt S15 ein hydraulisches Soll-Bremsmoment gleich einer Differenz des Bremsmoments bx(t) (entsprechend der Betätigungsstärke x(t)) und des aktuell ausführbaren (maximalen) Generator-Bremselement b(t) aufgebaut werden.

Vorzugsweise wird dazu ab einem Gesamt-Bremsmoment (Fahrerbremswunsch) über dem (maximal) ausführbaren Generator-Bremsmoment b(t) das Hochdruckschaltventil geschlossen. Auf diese Weise ist ein der Differenz zwischen dem der Betätigungsstärke x(t) entsprechenden Bremsmoment bx(t) und dem (maximal) ausführbaren Generator-Bremsmoment b(t) entsprechendes Volumen in die mindestens eine Radbremszange verschiebbar. Somit kann entsprechend der Erhöhung des Fahrerbremswunsches zusätzlich zu dem Generator-Bremsmoment noch ein hydraulisches Bremsmoment über einen Druckaufbau in der mindestens einen Radbremszange aufgebaut werden. Vorzugsweise entspricht die Summe aus dem Generator-Bremsmoment und dem hydraulischen Bremsmoment dem Fahrerbremswunsch/der Betätigungsstärke x(t).

Somit kann bei einer Betätigungsstärke x(t) unter der Mindestbetätigungsstärke xmin, bzw. bei einem Fahrerbremswunsch innerhalb des Jump-In-Bereichs, wahlweise rein hydraulisch, hydraulisch und regenerativ (Verfahrensschritt S15), oder rein regenerativ (Verfahrensschritt S13) gebremst werden. Lässt das aktuell ausübbare Generator-Bremsmoment (regenerative Bremsmoment) eine rein regenerative Bremsung zu, so wird über ein Öffnen des Hochdruckschaltventils sichergestellt, dass das vom Fahrer aus dem Hauptbremszylinder verschobene Volumen in die Speicherkammer verschoben wird, und damit kein

hydraulisches Bremsmoment aufgebaut wird. Ab einem Fahrerbremswunsch über dem maximal ausführbaren Generator-Bremsmoment kann zumindest ein Teil der Fahrzeugverzögerung über die mindestens eine Radbremszange bewirkt werden.

Bei einem Verblenden des Generator-Bremsmoments, welches den Fahrerbremswunsch zumindest teilweise erfüllt, kann das vom Fahrer aus dem Hauptbremszylinder verschobene Bremsflüssigkeitsvolumen aufgrund des Verzichts auf ein Rückschlagventil direkt in die Speicherkammern verschoben werden. Es entsteht somit kein Druckaufbau in dem mit der Speicherkammer ausgestatteten Bremssystem, wodurch kein hydraulisches Bremsmoment aufgebaut wird. Aufgrund der geschlossenen Einlassventile kann zusätzlich sichergestellt werden, dass tatsächlich kein hydraulisches Restmoment in den Radbremszylindern aufgebaut wird, da kein Volumen in die mindestens eine Radbremszange verschiebbar ist, bzw. kein Volumen über die mindestens eine Radbremszange in die Speicherkammer verschoben wird.

Sofern eine Kraftübertragung zwischen dem Bremsbetätigungselement und dem Hauptbremszylinder-Kolben bei einer Betätigungsstärke x(t) unter der Mindestbetätigung xmin unterbunden ist, spürt der Fahrer nicht anhand der Gegenkraft am Bremsbetätigungselement, wohin das von ihm aus dem Hauptbremszylinder verschobene Volumen transferiert wird. Der Fahrer bemerkt somit keinen Unterschied zwischen einem Ausführen des Verfahrensschritts S15 und einem Ausführen des Verfahrensschritts S13. Trotzdem ist mittels einer an dem Bremsbetätigungselement angeordneten Bremsbetätigungselement-Sensorik der Fahrerbremswunsch ermittelbar und die Fahrzeugverzögerung verlässlich entsprechend einstellbar.

Nach dem Verfahrensschritt S15 wird in einem Verfahrensschritt S16 untersucht, ob das (maximal) ausführbare Generator-Bremsmoment (zeitlich) abnimmt (b(t)<b(t-1)). Wird dies festgestellt, so wird/bleibt das Hochdruckschaltventil geschlossen. Anschließend kann in einem Verfahrensschritt S17 mittels der mindestens einen Pumpe Volumen aus der mindestens einen Speicherkammer zu der mindestens einen zugeordneten Radbremszange gefördert werden. Auf diese Weise wird der Bremsdruck in der mindestens einen Radbremszange gesteigert, was zu einem Anstieg des hydraulischen Bremsmoments führt. Vorzugsweise entspricht das mittels der Pumpe geförderte Volumen der (zeitlichen) Abnahme des ausführbaren Generator-Bremsmoments. In einem zuvor, gleichzeitig oder danach ausgeführten Verfahrensschritt S18 wird das (maximal) ausführbare Generator-Bremsmoment als auszuführendes Generator-Bremsmoment festgelegt. (Der Generator wird entsprechend angesteuert.)

Sofern in dem Verfahrensschritt S17 das gesamte zuvor in die Speicherkammer verschobene Volumen wieder in den mindestens einen Bremskreis zurückgefördert wird, wird anschließend rein hydraulisch gebremst. Aufgrund der unterbundenen Kraftübertragung zwischen dem Bremsbetätigungselement und dem Hauptbremszylinder-Kolben ist dies für den Fahrer jedoch nicht wahrnehmbar.

Bei einer zeitlichen Abnahme des maximal ausführbaren Generator-Bremsmoments während einer Bremsung wird das Hochdruckschaltventil des mindestens einen Bremskreises geschlossen, wobei vorzugsweise auch das mindestens eine Radeinlassventil des angesteuerten Bremskreises geöffnet wird. Der mittels des Pumpens bewirkte Druckanstieg ist beispielsweise mittels eines Hauptbremszylinder-Drucksensors messbar. Auf diese Weise ist eine Regelung der Pumpendrehzahl ausführbar. Zur Steigerung der Druckregelungsgenauigkeit kann zusätzlich zu der Pumpe auch das stetig regelbare Hochdruckschaltventil zur Einstellung des gewünschten hydraulischen Bremsmoments verwendet werden. Auch auf diese Weise ist verlässlich realisierbar, dass die Summe aus dem Generator-Bremsmoment und dem hydraulischen Bremsmoment dem Fahrerbremswunsch entspricht. Aufgrund der fehlenden mechanischen Kopplung/der unterbundenen Kraftübertragung zwischen dem Hauptbremszylinder und dem Bremsbetätigungselement ist auch der Pumpvorgang für den Fahrer bei der Betätigung des Bremsbetätigungselements nicht taktil wahrnehmbar.

Wird in einem Verfahrensschritt S19 festgestellt, dass das ausführbare Generator-Bremsmoment während der Bremsung zunimmt (b(t)>b(t-1)), so kann das auszuführende Generator-Bremsmoment in einem optionalen (nicht dargestellten) Verfahrensschritt trotzdem konstant gehalten werden. Gleichzeitig kann über ein entsprechendes Ansteuern des Hochdruckschaltventils sichergestellt werden, dass eine Reduzierung oder Erhöhung der Betätigungsstärke x(t) während der aktuell durchgeführten Bremsung lediglich zu einer Veränderung des hydraulischen Bremsmoments führt. Dies gilt solange, bis eine Betätigungsstärke x(t) über der Mindestbetätigungsstärke xmin (d.h. ein Verlassen des Jump-In-Bereichs) oder eine Betätigungsstärke x(t) entsprechend des aktuell ausgeführten Generator-Bremsmoments festgestellt wird. Diese Bremsstrategie hat den Vorteil des maximalen Komforts. Für den Fahrer ist weder eine Veränderung in der Pedalweg-Pedalkraft-Charakteristik noch eine Veränderung in der Pedalweg-Verzögerungs-Charakteristik feststellbar.

Alternativ zu den Verfahrensschritten des vorausgehenden Absatzes kann das Hochdruckschaltventils auch so angesteuert werden, dass das hydraulische Bremsmoment sich einer Erhöhung oder einer Reduzierung der Betätigungsstärke x(t) der Betätigung des Bremsbetätigungselements durch den Fahrer anpasst (nicht skizziert). Danach kann der Generator so angesteuert werden, dass das ausgeführte Generator-Bremsmoment entsprechend der Zunahme des ausführbaren Generator-Bremsmoments angehoben wird (nicht dargestellt). Dies ist auch möglich, ohne dass der Fahrer eine Veränderung seines Bremswunsches vorgibt. Eventuell kann die zu große Verzögerung dazu führen, dass der Fahrer das Pedal löst, wodurch das hydraulische Bremsmoment automatisch reduziert wird. Dies führt zu einer wahrnehmbaren Änderung der Pedalweg-Verzögerung-Charakteristik, maximiert jedoch die bei der Bremsung über die Rekuperation gewonnene Energie.

Als weitere (bevorzugte) kann auch eine Reduktion des hydraulischen Bremsmoments (Verfahrensschritt S20) und eine gleichzeitige Erhöhung des Generator-Bremsmoments (Verfahrensschritt S21) ausgeführt werden. Dabei kann das während der kombiniert regenerativ und hydraulisch durchgeführten Bremsung verschobene Volumen in dem Bremskreis mittels des mindestens einen stetig regelbaren Hochdruckschaltventils in die Speicherkammern abgelassen werden. Durch diese Möglichkeit der gezielten und geregelten Reduktion des hydraulischen Bremsmoments kann der Generator-Bremsmoment angepasst erhöht werden. Diese Betriebsstrategie hat den Vorteil des maximalen Bedienkomforts des Bremsbetätigungselements bei gleichzeitiger Rückgewinnung der maximal möglichen kinetischen Energie zum Aufladen der mittels des Generators aufladbaren Batterie.

Entsprechende Kombinationen der oben genannten Verfahrenschritte sind auch ausführbar, sofern das ausführbare Generator-Bremsmoment während der Bremsung konstant bleibt (b(t)=b(t-1)), wie mittels der Verfahrensschritte S22 und S23 wiedergegeben ist.

Wird bei einem Ausführen des Verfahrensschritts S11 festgestellt, dass die Betätigungsstärke x(t) größer als die Mindestbetätigungsstärke xmin ist/wird, bzw. dass der Fahrerbremswunsch dem Jump-In-Bereich verlässt, so wird/bleibt das Hochdruckschaltventil geschlossen. In einem Verfahrensschritt S24 kann anschließend das in die mindestens eine Speicherkammer verschobene Volumen mittels der Pumpe in den mindestens einen Bremskreis zurückgefördert werden.

In einem weiteren Verfahrensschritt S25 kann das auszuführende Generator-Bremsmoment auf Null reduziert und der Generator entsprechend angesteuert werden. Am Ende der Verfahrensschritte S24 und S25 kann das Bremssystem ein rein hydraulisches Bremsen ausführen. Diese Vorgehensweise führt nicht zu einer Änderung in der Pedalweg-Pedalkraft und in der Pedalweg-Verzögerungs-Charakteristik. Sie ist für den Fahrer nicht wahrnehmbar, und deshalb nicht mit einer Komforteinbuße verbunden.

Als Alternative zu dem Verfahrensschritt S24 ist es ebenfalls denkbar, nach einem Feststellen des Übersteigerns der Mindestbetätigungsstärke xmin durch die Betätigungsstärke x(t), bzw. nach einem Verlassen des Jump-In-Bereichs, das auszuführende Generator-Bremsmoment nicht vollständig auf Null zu reduzieren. Beispielsweise kann das auszuführende Generator-Bremsmoment stattdessen weiterhin entsprechend des Hauptbremszylinder-Drucks vorgegeben und der Generator entsprechend angesteuert werden. Auf diese Weise ist die rekuperative Effizienz des Bremssystems steigerbar, da auch außerhalb des Jump-In-Bereichs regenerativ gebremst wird und die Batterie somit schneller aufgeladen wird. Die sich daraus ergebende veränderte Pedalweg-Verzögerungs-Charakteristik ist zwar für den Fahrer wahrnehmbar, wird von diesem jedoch eher positiv wahrgenommen, da er somit bei einer starken Bremsung auch eine taktil wahrnehmbare Rückwirkung des Bremssystems spürt.

Durch ein Ausführen des Verfahrens ist es möglich, das hydraulische Bremsmoment mindestens einer Radbremszange des Bremssystems so einzustellen, dass trotz eines zeitlichen Variierens des ausführbaren Generator-Bremsmoments b(t) der von dem Fahrer vorgegebene Bremswunsch bei der Rekuperation verlässlich eingehalten wird. Reicht das (maximal) ausführbare Generator-Bremsmoment b(t) für ein vollständiges Umzusetzen des Fahrerbremswunsches aus, so kann rein generativ gebremst werden, wodurch die Batterie schnell aufladbar ist.

Ist der Fahrerbremswunsch größer als das (maximal) ausführbare Generator-Bremsmoment b(t), so kann zusätzlich zu dem Generator-Bremsmoment ein hydraulisches Bremsmoment aufgebaut werden. Dies erfolgt vorzugsweise so, dass der Fahrerbremswunsch vollständig erfüllt wird. Ebenso kann in einer Situation, in welcher kein Generator-Bremsmoment durch den Generator ausführbar ist, rein hydraulisch gebremst werden.

Bei dem oben beschriebenen Bremssystem, bzw. bei einem mittels des hier beschriebenen Verfahrens betriebenen Bremssystem, sind teilaktive Bremsanforderungen, d.h. Druckaufbauten mittels der Pumpe, aufgrund des Verzichts auf das Rückschlagventil mittels einer geänderten Vorgehensweise ausführbar. Hat der Fahrer bereits Volumen in den Bremskreis verschoben und somit einen entsprechenden hydraulischen Bremsdruck erzeugt, so kann das stetig regelbare Hochdruckschaltventil mittels einer Delta-P-Regelung derart geöffnet werden, dass ein begrenztes Volumen über das geöffnete Hochdruckschaltventil in die zugeordnete Speicherkammer des gleichen Bremskreises verschoben wird, ohne dass dabei der hydraulische Druck im Bremskreis signifikant reduziert wird. Die somit erzeugten Pedalrückwirkungen sind vergleichbar zu denen konventioneller Bremssysteme bei teilaktiven Bremsanforderungen. Das in die Speicherkammer verschobene Volumen kann anschließend mittels der Pumpe in den Bremskreis gefördert werden, um so den Fahrer bei seiner Bremsanforderung zu unterstützen.

## Patentansprüche

1. Bremssystem für ein Fahrzeug mit:
einem Hauptbremszylinder (10);
einem Bremskreis (14a, 14b) mit zwei Radbremszangen (16a, 16b), zwei Radauslassventilen (45a, 45b), einer Speicherkammer (18a, 18b), einem Hochdruckschaltventil (20a, 20b) und einer Pumpe (46a, 46b), wobei eine Ansaugseite der Pumpe mit den zwei Radauslassventilen (45a, 45b) über eine sich verzweigende erste Leitung (48a, 48b) hydraulisch verbunden ist, und das Hochdruckschaltventil (20a, 20b) über eine zweite Leitung (70a, 70b) mit einem in der ersten Leitung (48a, 48b) ausgebildeten Verzweigungspunkt (72a, 72b) hydraulisch verbunden ist; und
einer Steuervorrichtung (80) mit einer Ventilsteuereinrichtung (1), welche dazu ausgelegt ist, unter Berücksichtigung eines bereitgestellten Informationssignals (2) bezüglich eines aktuell ausgeübten oder auszuübenden Generator-Bremsmoments eines Generators (78) das Hochdruckschaltventil (20a, 20b) so in einen zumindest teilgeöffneten Zustand zu steuern, dass ein Bremsflüssigkeitsvolumen aus dem Hauptbremszylinder (10) über das in den zumindest teilgeöffneten Zustand gesteuerte Hochdruckschaltventil (20a, 20b) in die Speicherkammer (18a, 18b) verschoben wird,
**dadurch gekennzeichnet, dass**
die Speicherkammer (18a, 18b) eine Niederdruckspeicherkammer (18a, 18b) ist, welche an die Rückschlagventil-lose erste Leitung (48a, 48b) so angebunden ist, dass das Bremsflüssigkeitsvolumen unter Umgehung der zwei Radbremszangen (16a, 16b) in die Niederdruckspeicherkammer (18a, 18b) transferiert wird.

2. Bremssystemnach Anspruch 1, wobei, sofern das Informationssignal (2) unter einem Vergleichssignal bezüglich eines Mindest-Generator-Bremsmoments liegt, das Hochdruckschaltventil (20a, 20b) mittels der Ventilsteuereinrichtung (1) so in einen geschlossenen Zustand steuerbar ist, dass eine hydraulische Verbindung zwischen dem Hauptbremszylinder (10) und der Speicherkammer (18a, 18b) durch das in den geschlossenen Zustand gesteuerte Hochdruckschaltventil (20a, 20b) unterbunden ist.

3. Bremssystemnach Anspruch 2, wobei, sofern das Informationssignal (2) über dem Vergleichssignal liegt, mindestens ein Radeinlassventil (34a, 34b) des Bremskreises (14a, 14b) so in einen geschlossenen Zustand steuerbar ist, dass eine hydraulische Verbindung zwischen dem Hauptbremszylinder (10) und mindestens einer Radbremszange (16a, 16b) des Bremskreises (14a, 14b) durch das in den geschlossenen Zustand gesteuerte mindestens eine Radeinlassventil (34a, 34b) unterbunden ist.

4. Bremssystem nach einem der vorhergehenden Ansprüche, wobei die Steuervorrichtung (80) eine Generatorsteuereinrichtung (4) umfasst, mittels welcher das auszuübende Generator-Bremsmoment des Generators (78) unter Berücksichtigung eines ersten Sensorsignals (5) bezüglich einer Betätigungsstärke einer Betätigung eines Bremsbetätigungselements (22) des Bremssystems und/oder eines zweiten Sensor- und/oder Informationssignal (6) bezüglich mindestens eines ausführbaren Kann-Generator-Bremsmoments festlegbar ist und ein dem festgelegten auszuübenden Generator-Bremsmoment entsprechendes Generator-Steuersignal (7) an den Generator (78) ausgebbar ist.

5. Bremssystem nach Anspruch 4, wobei, mittels der Generatorsteuereinrichtung (4) das auszuübende Generator-Bremsmoment unter Berücksichtigung des zweiten Sensor- und/oder Informationssignals (6) und einer Funktion (bx(t)) einer aus dem ersten Sensorsignal (5) hergeleiteten Größe (x(t)) festlegbar ist, wobei ein Maximum der Funktion (bx(t)) bei einer aus dem ersten Sensorsignal hergeleiteten Größe (x(t)) gleich einer Mindestbetätigungsstärke (xmin), ab welcher eine auf das Bremsbetätigungselement (22) aufgebrachte Fahrerbremskraft auf einen verstellbaren Hauptbremszylinder-Kolben des Hauptbremszylinders (10) übertragbar ist, liegt.

6. Bremssystem nach einem der vorhergehenden Ansprüche, wobei die Steuervorrichtung (80) zusätzlich eine Pumpensteuereinrichtung (8) umfasst, mittels welcher, sofern das aktuell ausgeübte oder auszuübende Generator-Bremsmoment zeitlich abnimmt, eine Pumpe (46a, 46b) des Bremskreises (14a, 14b), mittels welcher Bremsflüssigkeit aus der Speicherkammer (18a, 18b) des Bremskreises (14a, 14b) zu der mindestens einen Radbremszange (16a, 16b) des Bremskreises (14a, 14b) pumpbar ist, aus einem inaktiven Pumpmodus in einen aktiven Pumpmodus steuerbar ist.

7. Bremssystem nach einem der vorhergehenden Ansprüche, wobei das Bremssystem ein stetig regelbares Hochdruckschaltventil (20a, 20b) umfasst.

8. Verfahren zum Betreiben eines Bremssystems eines Fahrzeugs umfassend einen Hauptbremszylinder (10) und einen Bremskreis (14a, 14b) mit zwei Radbremszangen (16a, 16b), zwei Radauslassventilen (45a, 45b), einer Speicherkammer (18a, 18b), einem Hochdruckschaltventil (20a, 20b) und einer Pumpe (46a, 46b), wobei eine Ansaugseite der Pumpe mit den zwei Radauslassventilen (45a, 45b) über eine sich verzweigende erste Leitung (48a, 48b) hydraulisch verbunden ist, und das Hochdruckschaltventil (20a, 20b) über eine zweite Leitung (70a, 70b) mit einem in der ersten Leitung (48a, 48b) ausgebildeten Verzweigungspunkt (72a, 72b) hydraulisch verbunden ist; mit den Schritten:
Vergleichen einer Bremsmoment-Größe (2) bezüglich eines aktuell ausgeübten oder auszuübenden Generator-Bremsmoments eines Generators (78) mit einer Vergleichsgröße bezüglich eines Mindest-Generator-Bremsmoments (S1); und
sofern die Bremsmoment-Größe über der Vergleichsgröße liegt, Steuern des Hochdruckschaltventils (20a, 20b) so in einen zumindest teilgeöffneten Zustand, dass ein aus dem Hauptbremszylinder (10) herausgedrücktes Bremsflüssigkeitsvolumen über das in den zumindest teilgeöffneten Zustand gesteuerte Hochdruckschaltventil (20a, 20b) in die Speicherkammer (18a, 18b) verschoben wird;
**gekennzeichnet durch** den Schritt:
Transferieren des Bremsflüssigkeitsvolumens **durch** die Rückschlagventil-lose erste Leitung (48a, 48b) in die als Niederdruckspeicherkammer (18a, 18b) ausgebildete Speicherkammer (18a, 18b) unter Umgehung der zwei Radbremszangen (16a, 16b).

9. Verfahren nach Anspruch 8, wobei, sofern die Bremsmoment-Größe (2) über der Vergleichsgröße liegt, mindestens ein Radeinlassventil (34a, 34b) des Bremskreises (14a, 14b) so in einen geschlossenen Zustand gesteuert wird, dass eine hydraulische Verbindung zwischen dem Hauptbremszylinder (14) und mindestens einer Radbremszange (16a, 16b) des Bremskreises (14a, 14b) durch das in den geschlossenen Zustand gesteuerte mindestens eine Radeinlassventil (34a, 34b) unterbunden wird (S3).

10. Verfahren nach Anspruch 8 oder 9, wobei, das auszuübende Generator-Bremsmoment des Generators (78) unter Berücksichtigung einer Betätigungsstärkegröße (5, x(t)) bezüglich einer Betätigungsstärke einer Betätigung eines Bremsbetätigungselements (22) des Bremssystems und/oder einer Generator-Information (6, b(t)) bezüglich mindestens eines ausführbaren Kann-Generator-Bremsmoments festgelegt wird (S6), und der Generator (78) entsprechend dem festgelegten auszuübenden Generator-Bremsmoment angesteuert wird (S7).

11. Verfahren nach Anspruch 10, wobei, sofern eine gesteigerte Betätigungsstärkegröße (x(t)) erkannt wird, die gesteigerte Betätigungsstärkegröße (x(t)) mit einem Schwellwert (xmin) bezüglich einer Mindestbetätigungsstärke, ab welcher eine auf das Bremsbetätigungselement (22) aufgebrachte Fahrerbremskraft auf einen verstellbaren Hauptbremszylinder-Kolben des Hauptbremszylinders (10) übertragen wird, verglichen wird, und, sofern die gesteigerte Betätigungsstärkegröße (x(t)) den Schwellwert (xmin) überschreitet, das auszuübende Generator-Bremsmoment trotz der gesteigerten Betätigungsstärkegröße (x(t)) konstant gehalten oder reduziert wird (S24).

12. Verfahren nach einem der Ansprüche 8 bis 11, wobei, sofern das aktuell ausgeübte oder auszuübende Generator-Bremsmoment zeitlich abnimmt, eine Pumpe (46a, 46b) des Bremskreises (14a, 14b), mittels welcher Bremsflüssigkeit aus der Speicherkammer (18a, 18b) des Bremskreises (14a, 14b)zu der mindestens einen Radbremszange (16a, 16b) des Bremskreises (14a, 14b) pumpbar ist, aus einem inaktiven Pumpmodus in einen aktiven Pumpmodus gesteuert wirt.

## Claims

1. Brake system for a vehicle, comprising:
a master brake cylinder (10);
a brake circuit (14a, 14b) with two wheel brake callipers (16a, 16b), two wheel outlet valves (45a, 45b), an accumulator chamber (18a, 18b), a high-pressure switching valve (20a, 20b) and a pump (46a, 46b), wherein an intake side of the pump is hydraulically connected via a first branching line (48a, 48b) to the two wheel outlet valves (45a, 45b), and the high-pressure switching valve (20a, 20b) is hydraulically connected via a second line (70a, 70b) to a branching point (72a, 72b) which is formed in the first line (48a, 48b); and
a control device (80) having a valve control device (1) which is configured to control, while taking into account a supplied information signal (2) relating to a generator braking torque, which is currently applied or is to be applied, of a generator (78), the high-pressure switching valve (20a, 20b) into an at least partially opened state in such a way that a volume of brake fluid is shifted from the master brake cylinder (10) into the accumulator chamber (18a, 18b) via the high-pressure switching valve (20a, 20b) which is controlled into the at least partially opened state,
**characterized in that**
the accumulator chamber (18a, 18b) is a low-pressure accumulator chamber (18a, 18b) which is connected to the first line (48a, 48b), which is without a non-return valve, in such a way that the volume of brake fluid is transferred into the low-pressure accumulator chamber (18a, 18b) by bypassing the two wheel brake callipers (16a, 16b).

2. Brake system according to Claim 1, wherein, in so far as the information signal (2) is below a comparison signal relating to a minimum generator braking torque, the high-pressure switching valve (20a, 20b) can be controlled by means of the valve control device (1) into a closed state in such a way that a hydraulic connection between the master brake cylinder (10) and the accumulator chamber (18a, 18b) is prevented by the high-pressure switching valve (20a, 20b) which is controlled into the closed state.

3. Brake system according to Claim 2, wherein, in so far as the information signal (2) is above the comparison signal, at least one wheel inlet valve (34a, 34b) of the brake circuit (14a, 14b) can be controlled into a closed state in such a way that a hydraulic connection between the master brake cylinder (10) and at least one wheel brake calliper (16a, 16b) of the brake circuit (14a, 14b) is prevented by the at least one wheel inlet valve (34a, 34b) which is controlled into the closed state.

4. Brake system according to one of the preceding claims, wherein the control device (80) comprises a generator control device (4) by means of which the generator braking torque, to be applied, of the generator (78) can be defined by taking into account a first sensor signal (5) relating to an activation intensity of activation of a brake activation element (22) of the brake system and/or a second sensor and/or information signal (6) relating to at least one executable possible generator braking torque, and a generator control signal (7) which corresponds to the defined generator braking torque which is to be applied can be output to the generator (78).

5. Brake system according to Claim 4, wherein, by means of the generator control device (4), the generator braking torque which is to be applied can be defined by taking into account the second sensor and/or information signal (6) and a function (bx(t)) of a value (x(t)) which is derived from the first sensor signal (5), wherein a maximum of the function (bx(t)) occurs in the case of a value (x(t)) which is derived from the first sensor signal and is equal to a minimum activation intensity (xmin) starting from which a driver braking force which is applied to the brake activation element (22) can be transmitted to an adjustable master brake cylinder piston of the master brake cylinder (10).

6. Brake system according to one of the preceding claims, wherein the control device (80) additionally comprises a pump control device (8) by means of which, in so far as the generator braking torque which is currently applied or to be applied decreases over time, a pump (46a, 46b) of the brake circuit (14a, 14b) by means of which brake fluid can be pumped from the accumulator chamber (18a, 18b) of the brake circuit (14a, 14b) to the at least one wheel brake calliper (16a, 16b) of the brake circuit (14a, 14b), can be controlled from an inactive pumping mode into an active pumping mode.

7. Brake system according to one of the preceding claims, wherein the brake system comprises a high-pressure switching valve (20a, 20b) which can be regulated continuously.

8. Method for operating a brake system of a vehicle comprising a master brake cylinder (10) and a brake circuit (14a, 14b) with two wheel brake callipers (16a, 16b), two wheel outlet valves (45a, 45b), an accumulator chamber (18a, 18b), a high-pressure switching valve (20a, 20b) and a pump (46a, 46b), wherein an intake side of the pump is hydraulically connected via a first branching line (48a, 48b) to the two wheel outlet valves (45a, 45b), and the high-pressure switching valve (20a, 20b) is hydraulically connected via a second line (70a, 70b) to a branching point (72a, 72b) which is formed in the first line (48a, 48b), comprising the steps:
comparing a braking torque value (2) relating to a generator braking torque which is currently applied or is to be applied, of a generator (78) with a comparison value relating to a minimum generator braking torque (S1); and
in so far as the braking torque value is above the comparison value, controlling the high-pressure switching valve (20a, 20b) into an at least partially opened state in such a way that a volume of brake fluid which is forced out of the master brake cylinder (10) is shifted into the accumulator chamber (18a, 18b) via the high-pressure switching valve (20a, 20b) which is controlled into the at least partially opened state;
**characterized by** the step:
transferring the volume of brake fluid through the first line (48a, 48b), which is without a non-return valve, into the accumulator chamber (18a, 18b), embodied as a low-pressure accumulator chamber (18a, 18b), by bypassing the two wheel brake callipers (16a, 16b).

9. Method according to Claim 8, wherein, in so far as the braking torque value (2) is above the comparison value, at least one wheel inlet valve (34a, 34b) of the brake circuit (14a, 14b) is controlled into a closed state in such a way that a hydraulic connection between the master brake cylinder (14) and at least one wheel brake calliper (16a, 16b) of the brake circuit (14a, 14b) is prevented (S3) by the at least one wheel inlet valve (34a, 34b) which is controlled into the closed state.

10. Method according to Claim 8 or 9, wherein the generator braking torque, to be applied, of the generator (78) is defined (S6) taking into account an activation intensity value (5, x(t)) relating to an activation intensity of activation of a brake activation element (22) of the brake system and/or generator information (6, b(t)) relating to at least one executable possible generator braking torque, and the generator (78) is actuated (S7) in accordance with the defined generator braking torque to be applied.

11. Method according to Claim 10, wherein, in so far as an increased activation intensity value (x(t)) is detected, the increased activation intensity value (x(t)) is compared with a threshold value (xmin) relating to a minimum activation intensity starting from which a driver braking force, applied to the brake activation element (22), is transmitted to an adjustable master brake cylinder piston of the master brake cylinder (10), and in so far as the increased activation intensity value (x(t)) exceeds the threshold value (xmin), the generator braking torque which is to be applied is kept constant or reduced (S24) despite the increased activation intensity value (x(t)).

12. Method according to one of Claims 8 to 11, wherein, in so far as the generator braking torque which is currently applied or is to be applied, decreases over time, a pump (46a, 46b) of the brake circuit (14a, 14b) by means of which brake fluid can be pumped out of the accumulator chamber (18a, 18b) of the brake circuit (14a, 14b) to the at least one wheel brake calliper (16a, 16b) of the brake circuit (14a, 14b), is controlled from an inactive pumping mode into an active pumping mode.

## Revendications

1. Système de frein pour un véhicule, comprenant :
un maître-cylindre de frein (10) ;
un circuit de frein (14a, 14b) comprenant deux pinces de frein de roue (16a, 16b), deux soupapes de décharge de roue (45a, 45b), une chambre d'accumulation (18a, 18b), une vanne de commutation haute pression (20a, 20b) et une pompe (46a, 46b), un côté sortie de la pompe étant relié hydrauliquement aux deux soupapes de décharge de roue (45a, 45b) par le biais d'une première conduite (48a, 48b) qui se ramifie, et la vanne de commutation haute pression (20a, 20b) étant reliée hydrauliquement par le biais d'une deuxième conduite (70a, 70b) à un point de dérivation (72a, 72b) formé dans la première conduite (48a, 48b) ; et
un dispositif de commande (80) comprenant un appareil de commande de vanne (1) qui est conçu pour, en tenant compte d'un signal d'information (2) délivré concernant un moment de freinage de générateur actuellement appliqué ou à appliquer d'un générateur (78), commander la vanne de commutation haute pression (20a, 20b) dans un état au moins partiellement ouvert de sorte qu'un volume de liquide de frein soit déplacé hors du maître-cylindre de frein (10) dans la chambre d'accumulation (18a, 18b) par le biais de la vanne de commutation haute pression (20a, 20b) commandée dans l'état au moins partiellement ouvert,
**caractérisé en ce que**
la chambre d'accumulation (18a, 18b) est une chambre d'accumulation à basse pression (18a, 18b) qui est raccordée à la première conduite (48a, 48b) exempte de clapet anti-retour de telle sorte que le volume de liquide de frein est transféré dans la chambre d'accumulation à basse pression (18a, 18b) en contournant les deux pinces de frein de roue (16a, 16b).

2. Système de frein selon la revendication 1, avec lequel, sous réserve que le signal d'information (2) se trouve au-dessous d'un signal comparatif concernant un moment de freinage de générateur minimum, la vanne de commutation haute pression (20a, 20b) peut être commandée au moyen de l'appareil de commande de vanne (1) dans un état fermé de telle sorte qu'une liaison hydraulique entre le maître-cylindre de frein (10) et la chambre d'accumulation (18a, 18b) est empêchée par la vanne de commutation haute pression (20a, 20b) commandée dans l'état fermé.

3. Système de frein selon la revendication 2, avec lequel, sous réserve que le signal d'information (2) se trouve au-dessus du signal comparatif, au moins une soupape d'admission de roue (34a, 34b) du circuit de frein (14a, 14b) peut être commandée dans un état fermé de telle sorte qu'une liaison hydraulique entre le maître-cylindre de frein (10) et au moins une pince de frein de roue (16a, 16b) du circuit de frein (14a, 14b) est empêchée par l'au moins une soupape d'admission de roue (34a, 34b) commandée dans l'état fermé.

4. Système de frein selon l'une des revendications précédentes, avec lequel le dispositif de commande (80) comprend un appareil de commande de générateur (4) au moyen duquel le moment de freinage de générateur à appliquer du générateur (78) peut être défini en tenant compte d'un premier signal de capteur (5) concernant une intensité d'actionnement d'un actionnement d'un élément d'actionnement de frein (22) du système de frein et/ou d'un deuxième signal de capteur et/ou d'information (6) concernant au moins un moment de freinage de générateur pouvant être exécuté et un signal de commande de générateur (7) correspondant au moment de freinage de générateur à appliquer défini peut être délivré au générateur (78).

5. Système de frein selon la revendication 4, avec lequel le moment de freinage de générateur à appliquer au moyen du dispositif de commande de générateur (4) peut être défini en tenant compte du deuxième signal de capteur et/ou d'information (6) et d'une fonction (bx(t)) d'une grandeur (x(t)) dérivée du premier signal de capteur (5), un maximum de la fonction (bx(t)) correspondant à une grandeur (x(t)) dérivée du premier signal de capteur égale à une intensité d'actionnement minimale (xmin), à partir de laquelle une force de freinage de conducteur appliquée sur l'élément d'actionnement de frein (22) peut être transmise à un piston de maître-cylindre de frein du maître-cylindre de frein (10).

6. Système de frein selon l'une des revendications précédentes, avec lequel le dispositif de commande (80) comprend en plus un appareil de commande de pompe (8) au moyen duquel, sous réserve que le moment de freinage de générateur actuellement appliqué ou à appliquer diminue dans le temps, une pompe (46a, 46b) du circuit de frein (14a, 14b), à l'aide de laquelle du liquide de frein peut être pompé de la chambre d'accumulation (18a, 18b) du circuit de frein (14a, 14b) vers l'au moins une pince de frein de roue (16a, 16b) du circuit de frein (14a, 14b), peut être commandée d'un mode de pompe inactive en un mode de pompe active.

7. Système de frein selon l'une des revendications précédentes, avec lequel le système de frein comprend une vanne de commutation haute pression (20a, 20b) régulable.

8. Procédé pour faire fonctionner un système de frein pour un véhicule, comprenant un maître-cylindre de frein (10) et un circuit de frein (14a, 14b) comprenant deux pinces de frein de roue (16a, 16b), deux soupapes de décharge de roue (45a, 45b), une chambre d'accumulation (18a, 18b), une vanne de commutation haute pression (20a, 20b) et une pompe (46a, 46b), un côté sortie de la pompe étant relié hydrauliquement aux deux soupapes de décharge de roue (45a, 45b) par le biais d'une première conduite (48a, 48b) qui se ramifie, et la vanne de commutation haute pression (20a, 20b) étant reliée hydrauliquement par le biais d'une deuxième conduite (70a, 70b) à un point de dérivation (72a, 72b) formé dans la première conduite (48a, 48b) ; comprenant les étapes suivantes :
comparaison d'une grandeur de moment de freinage (2) concernant un moment de freinage de générateur actuellement appliqué ou à appliquer d'un générateur (78) avec une grandeur comparative concernant un moment de freinage de générateur minimum (S1) ; et
sous réserve que la grandeur de moment de freinage est supérieure à la grandeur comparative, commande de la vanne de commutation haute pression (20a, 20b) dans un état au moins partiellement ouvert de sorte qu'un volume de liquide de frein refoulé hors du maître-cylindre de frein (10) soit déplacé dans la chambre d'accumulation (18a, 18b) par le biais de la vanne de commutation haute pression (20a, 20b) commandée dans l'état au moins partiellement ouvert ;
**caractérisé par** l'étape :
transfert du volume de liquide de frein, à travers la première conduite (48a, 48b) exempte de clapet anti-retour, dans la chambre d'accumulation (18a, 18b) réalisée sous la forme d'une chambre d'accumulation à basse pression (18a, 18b) en contournant les deux pinces de frein de roue (16a, 16b).

9. Procédé selon la revendication 8, selon lequel, sous réserve que la grandeur de moment de freinage (2) est supérieure à la grandeur comparative, au moins une soupape d'admission de roue (34a, 34b) du circuit de frein (14a, 14b) est commandée dans un état fermé de telle sorte qu'une liaison hydraulique entre le maître-cylindre de frein (14) et au moins une pince de frein de roue (16a, 16b) du circuit de frein (14a, 14b) est empêchée (S3) par l'au moins une soupape d'admission de roue (34a, 34b) commandée dans l'état fermé.

10. Procédé selon la revendication 8 ou 9, selon lequel le moment de freinage de générateur à appliquer du générateur (78) est déterminé (S6) en tenant compte d'une grandeur d'intensité d'actionnement (5, x(t)) concernant une intensité d'actionnement d'un actionnement d'un élément d'actionnement de frein (22) du système de frein et/ou d'une information de générateur (6, b(t)) concernant au moins un moment de freinage de générateur possible, et le générateur (78) est commandé (S7) conformément au moment de freinage de générateur à appliquer défini.

11. Procédé selon la revendication 10, selon lequel, sous réserve qu'une grandeur d'intensité d'actionnement (x(t)) ayant augmenté soit détectée, la grandeur d'intensité d'actionnement (x(t)) ayant augmenté est comparée à une valeur de seuil (xmin) concernant une intensité d'actionnement minimale à partir de laquelle une force de freinage de conducteur appliquée sur l'élément d'actionnement de frein (22) est transmise à un piston de maître-cylindre de frein réglable du maître-cylindre de frein (10) et, sous réserve que la grandeur d'intensité d'actionnement (x(t)) ayant augmenté dépasse la valeur de seuil (xmin), le moment de freinage de générateur à appliquer est maintenu constant ou réduit (S24) malgré la grandeur d'intensité d'actionnement (x(t)) ayant augmenté.

12. Procédé selon l'une des revendications 8 à 11, selon lequel, sous réserve que le moment de freinage de générateur actuellement appliqué ou à appliquer diminue dans le temps, une pompe (46a, 46b) du circuit de frein (14a, 14b), à l'aide de laquelle du liquide de frein peut être pompé de la chambre d'accumulation (18a, 18b) du circuit de frein (14a, 14b) vers l'au moins une pince de frein de roue (16a, 16b) du circuit de frein (14a, 14b), est commandée d'un mode de pompe inactive en un mode de pompe active.
